# EUROPÄISCHE PATENTSCHRIFT

(11) **EP 0 761 283 B1**
(45) Veröffentlichungstag und Bekanntmachung des Hinweises auf die Patenterteilung: **02.02.2005**
(21) Anmeldenummer: 96113184.4
(22) Anmeldetag: 16.08.1996
(51) Int. Cl.: B01D 53/18, B01D 3/00, B01J 19/30, B01J 19/32

(54) **Destillationskolonne mit Packungsmaterial und Verfahren zur destillativen Trennung von Stoffgemischen mit diesem Packungsmaterial**
Distillation column packed with a packing material and process for separating product mixtures by distillation using said column
Colonne de distillation comprenant des éléments de remplissage et procédé de séparation de mélanges par distillation utilisant ladite colonne

(30) Priorität: 17.08.1995 DE 19530329
(43) Veröffentlichungstag der Anmeldung: 12.03.1997
(73) Patentinhaber: BASF AKTIENGESELLSCHAFT, 67056 Ludwigshafen (DE)
(72) Erfinder: Stroezel, Manfred, 68549 Ilvesheim (DE); Bröcker, Franz-Josef, Dr., 67061 Ludwigshafen (DE); Jansen, Helmut, 41542 Dormagen (DE); Kaibel, Gerd, Dr., 68623 Lampertheim (DE)
(74) Vertreter: Isenbruck, Günter, Dr.

(56) Entgegenhaltungen:
- EP-A- 0 068 862
- EP-A- 0 190 435
- EP-A- 0 270 050
- EP-A- 0 606 964
- WO-A-93/19335
- GB-A- 451 690
- "FÜLLKÖRPER" 1985 , RASCHIG GMBH , LUDWIGSHAFEN/RHEIN XP002020291 * Seite 1 - Seite 24 *

## Beschreibung

Die Erfindung bezieht sich auf ein Verfahren zur destillativen Trennung eines Stoffgemisches unter Verwendung einer Packung gebildet aus einem Packungsmaterial mit einer mikroskopischen Oberflächenrauhigkeit mit einem Rₐ-Wert nach DIN 4768/1 von 0,01 bis 10 µm, sowie auf eine Destillationskolonne mit einer vorstehend beschriebenen Packung.

Die Trennung von Stoffen kann auf vielfältige Weise in verschiedenen Typen von Kolonnen erfolgen. Bei Packungskolonnen wird eine Kolonne mehr oder weniger dicht mit einem Material bepackt, an dem sich ein Flüssigkeitsfilm ausbildet. Ein Gasstrom wird, meistens im Gegenstrom, durch die Packung hindurchgeführt, um den Kontakt und damit den Stoffausiausch zwischen Flüssigkeit und Gas zu ermöglichen.

Eine hohe Trennleistung erfordert eine hohe Packungsoberfläche pro Volumen. Mehr Oberfläche führt zu mehr Kontaktfläche zwischen Gas und Flüssigkeit und damit zu einer größeren Stoffübergangsmenge pro Zeiteinheit.

Das Ziel, höhere Packungsoberflächen zu schaffen wurde bisher durch makroskopische Maßnahmen angestrebt. So beschreibt das deutsche Patent 38 18 917 eine aus Metallblechen bestehende Packung, wobei die Ränder der Metallbleche seitlich ausgebogen sind, so daß sie aus der Blechseitenfläche vorstehen. Eine andere Maßnahme besteht darin, die Packungsgeometrie zu verändern, also räumlich dichtere Packungen vorzusehen. Mit beiden Gestaltungen wird mit hohem konstruktivem und damit finanziellem Aufwand nur eine relativ geringe Verbesserung der Trennleistung erreicht.

Die Verwendung von Geweben statt massiver Materialien mit glatten Oberflächen führt zwar zu deutlich verbesserter Trennleistung, ist aber sehr viel teuerer; Metallgewebe sind im Vergleich zu Metallblechen etwa zehnmal so teuer. Als kostengünstigere Zwischenform bieten sich Packungen aus Streckmetallen an, deren Trennleistung aber auch geringer ist (vgl. DE 38 18 917).

Schließlich wurden gewellte oder perforierte Oberflächen vorgeschlagen. Beide Gestaltungen führen jedoch zu einem weniger gleichmäßigen Flüssigkeitsfilm auf der Packungsoberfläche. Eine deutliche Verbesserung der Trennleistung ist damit auch nur schwer zu erzielen.

Seit längerer Zeit bekannt ist schließlich auch die Verwendung von Keramik-Füllkörpern in Stoffaustauschkolonnen. Vorteilhaft ist dabei die rauhe Oberfläche, nachteilig jedoch die schlechte Formbarkeit und die hohe Sprödigkeit von Keramikmaterial.

Aufgabe der vorliegenden Erfindung ist deshalb die Bereitstellung eines kostengünstigen Packungsmaterials in Destillationskolonnen, das zu einer deutlich verbesserten Trennleistung der Destillations -Kolonne führt. Entsprechend sollen Verfahren zur destillativen Trennung eines Stoffgemisches unter Verwendung derartiger Packungsmaterialien bereitgestellt werden.

Die Aufgabe wird durch die in den Ansprüchen beschriebenen Verfahrensvarianten gelöst, wobei ein Packungsmaterial chemisch mittels der im Anspruch 1 angegebenen Verfahrensschritte derart behandelt wird, daß die Oberfläche des Packungsmaterials durch die Erzeugung mikroskopischer Rauhigkeit vergrößert wird, wobei der Mittenrauhwert Rₐ nach DIN 4768/1 0,01 bis 10 µm, vorzugsweise 0,05 bis 1 µm beträgt.

Erfindungsgemäß aufgerauhte Edelstahloberflächen erscheinen bei der Betrachtung mit bloßem Auge als dunkle, matte Oberflächen in Vergleich zu den glänzenden Oberflächen unbehandelter Edelstähle. Bei der Betrachtung mit einem Rasterelektronenmikroskop lassen sich Rauhheiten im Bereich weniger Hundertstel bis zu einigen Mikrometern erkennen.

Bei dem zu bearbeitenden Packungsmaterial handelt es sich um verwendungsspezifisch geformte Rohmaterialien, es können aber auch bereits fertiggestellte oder in Verwendung befindliche Kolonnenpackungen nachbearbeitet werden.

Erfindungsgemäß wird eine Metalllegierung, vorzugsweise eine Edelstahllegierung, insbesondere eine Chrom oder Aluminium enthaltende Edelstahllegierung als Ausgangspackungsmaterial bei Temperaturen von 600 bis 1200 °C, vorzugsweise von 750 bis 1000 °C, während einer Zeitdauer von 30 bis 600 min, vorzugsweise von 180 bis 360 min, in einer sauerstoffhaltigen oder sauerstoffbildenden Atmosphäre, vorzugsweise in Luft, behandelt.

Durch Temperatur und Dauer der thermischen Behandlung kann die Aufrauhung gesteuert werden. Eine nur kurzzeitige thermische Behandlung bei niedrigen Temperaturen führt zu geringer Rauhigkeit, die sich bei vielen Edelstahllegierungen optisch in einer braunen matten Oberfläche zeigt. Längere thermische Behandlungen bei höheren Temperaturen führen bei diesen Materialien zu erhöhter Rauhigkeit und schwarzen matten Oberflächen. Die thermische Behandlung kann bei vielen Edelstahllegierungen somit auch über die gebildete Farbe kontrolliert und gesteuert werden.

Als Beispiel für eine aluminiumhaltige Stahllegierung, die sich zur thermischen Behandlung gut eignet, kann hier Kanthal (Werkstoff-Nummer: 1.4767) angeführt werden. Günstige Oberflächenrauhigkeiten werden bei 3 bis 6 stündigen thermischen Nachbehandlungen im Bereich von 800°C bis 1000°C erzielt. Für die thermische Nachbehandlung sind auch Nichteisenlegierungen, wie Messing, geeignet.

Bevorzugt wird eine sauerstoffhaltige oder sauerstoffbildende Atmosphäre mit einem Sauerstoffgehalt von 15 bis 30, vorzugsweise von 20 bis 25 Gew.-%, verwendet.

Alternativ wird eine Edelstahllegierung, insbesondere eine Chrom und Aluminium enthaltende Edelstahllegierung als Ausgangspackungsmaterial mit einer, insbesondere Nitrat-haltigen Metallsalzlösung mit einer Konzentration von 1 bis 20 Gew.-%, vorzugsweise von 5 bis 10 Gew.-%, getränkt und bei Temperaturen von 200 bis 700 °C während einer Zeitdauer von 5 bis 60 min in Luft behandelt.

Die der Erfindung zugrunde liegende Aufgabe wird auch durch die im Anspruch 11 beschriebene Destillationskolonne mit einer gemäß Anspruch 1 definierten Packung gelöst.

Das in der Destillationskolonne gemäß Anspruch 11 eingesetzte Packungsmaterial ist gekennzeichnet durch eine mikroskopische Rauhigkeit an der Oberfläche, ausgedrückt durch einen Mittenrauhwert Rₐ nach DIN 4768/1 von 0,01 bis 10 µm, vorzugsweise von 0,05 bis 1 µm, als Folge einer chemischen Behandlung wie im Anspruch 1 definiert.

### BEISPIELE

In den folgenden drei Beispielen wurde die Trennleistung von erfindungsgemäß thermisch nachbehandelten Streckmetallpackungen mit unbehandelten Streckmetallpackungen nach dem deutschen Patent DE 38 18 917 verglichen. Vor der Nachbehandlung waren die Streckmetallpackungen identisch.

In den folgenden Versuchen wurde die Trennleistung für Stoffgemische, deren Komponenten unterschiedliche Polarität und Benetzungseigenschaften aufwiesen, ermittelt. Alle Vergleichsversuche wurden, wie üblich, bei vollständigem Rücklauf durchgeführt. Um eine möglichst genaue Auswertung auch kleiner Konzentrationsunterschiede zu ermöglichen, wurden die mathematischen Modelle der Dampf-Flüssigkeits-Gleichgewichte über eine numerische Integration den theoretischen Trennstufen zugeordnet.

### BEISPIEL 1

### Trennung eines Methanol/Wasser-Gemisches

Eine unbehandelte und eine thermisch nachbehandelte Streckmetallpackung mit einem Durchmesser von 70 mm und einer gesamten Packungshöhe von 1,0 m wurde zur Destillation eines Methanol/Wasser-Gemisches in einer thermisch gut isolierten Destillationskolonne mit einer Destillationsblase bei unendlich hohem Rücklaufverhältnis verwendet. Der Druck betrug 1 bar. In der Kolonne mit der modifizierten Streckmetallpackung wurde nach Einstellung des Gleichgewichts im Kolonnensumpf eine Konzentration von 2,5 Gew.-% Methanol und bei einer Packungshöhe von 0,315 m eine Konzentration von 80,0 Gew.-% Methanol gefunden. Dies entspricht einer Trennleistung von 4,51 NTU/m. Bei der unbehandelten Streckmetallpackung ergaben sich entsprechend eine Sumpfkonzentration von 4,7 Gew.-% Methanol und eine Konzentration von 79,5 Gew.-% Methanol bei einer Packungshöhe von 0,315 m. Daraus ergibt sich eine Trennleistung von 4,13 NTU/m.

Die thermische Nachbehandlung der handelsüblichen Streckmetallpackung führt für die schlecht benetzende Methanol/Wasser-Mischung zu einer um etwa 10% erhöhten Trennleistung.

### BEISPIEL 2

### Trennung eines 2-Butanol/1-Butanol-Gemisches

Die Vergleichsvorrichtungen entsprechen den in Beispiel 1 beschriebenen Apparaturen. Nach Einstellung des Gleichgewichts wurde in der Kolonne mit der thermisch nachbehandelten Streckmetallpackung eine Sumpfkonzentration von 23,2 Gew.-% 2-Butanol und eine Kopfkonzentration von 88,7 Gew.-% 2-Butanol gefunden. Dies entspricht einer Trennleistung von 4,25 NTU/m. Bei Verwendung der unbehandelten Streckmetallpackung betrug die Sumpfkonzentration des 2-Butanols 30,4 Gew.-%, die Kopfkonzentration ebenfalls 88,7 Gew.-%. Dies entspricht einer Trennleistung von 3,7 NTU/m.

Die thermische Nachbehandlung verbesserte somit die Trennleistung bezüglich eines 2-Butanol/1-Butanol-Gemisches um rund 15%.

### BEISPIEL 3

### Trennung eines n-Heptan/Toluol-Gemisches

Der Versuchsaufbau entsprach dem in Beispiel 1 beschriebenen. Nach Einstellung des Gleichgewichts wurde in der Stoffaustauschkolonne mit der thermisch nachbehandelten Streckmetallpackung eine Sumpfkonzentration von 9,2 Gew.-% und eine Kopfkonzentration von 72,1 Gew.-% n-Heptan gefunden. Dies entspricht einer Trennleistung von 6,85 NTU/m. Bei Verwendung der unbehandelten Streckmetallpackung des gleichen Typs ergab sich eine Sumpfkonzentration von 9,1 Gew.-% und eine Kopfkonzentration von 69 Gew.-% n-Heptan, was einer Trennleistung von 6,1 NTU/m entspricht.

Bei der Trennung von n-Heptan und Toluol wurde in diesem Beispiel die Trennwirksamkeit infolge der thermischen Nachbehandlung um rund 12% erhöht.

In Abhängigkeit von dem zu trennenden Stoffgemisch wird die Trennleistung bei Verwendung erfindungsgemäß modifizierter Streckmetallpackungen deutlich erhöht. Der Effekt scheint umso größer zu sein, je stärker benetzend das zu trennende Stoffgemisch ist.

## Patentansprüche

1. Verfahren zur destillativen Trennung eines Stoffgemisches unter Verwendung einer Packung, gebildet aus einem Packungsmaterial mit einer mikroskopischen Oberflächenrauhigkeit mit einem Mittenrauhwert Rₐ nach DIN 4768/1 im Bereich von 0,01 bis 10µm, erhältlich durch
- Behandeln einer Metallegierung bei Temperaturen von 600 bis 1200 °C während einer Zeitdauer von 30 bis 600 Minuten in einer sauerstoffhaltigen oder sauerstoffbildenden Atmosphäre, oder durch
- Tränken einer Edelstahllegierung mit einer Metallsalzlösung mit einer Konzentration von 1 bis 20 Gew.-% und Behandeln bei Temperaturen von 200 bis 700 °C während einer Zeitdauer von 5 bis 60 Minuten in Luft.

2. Verfahren nach Anspruch 1, wobei der Mittenrauhwert Rₐ 0,05 bis 1 µm beträgt.

3. Verfahren nach einem der Ansprüche 1 oder 2, wobei die Metallegierung eine Edelstahllegierung ist.

4. Verfahren nach Anspruch 3, wobei als Edelstahllegierung eine Chrom oder Aluminium enthaltende Edelstahllegierung verwendet wird.

5. Verfahren nach einem der Ansprüche 1 bis 4, wobei die Behandlungstemperatur 750 bis 1000 °C beträgt.

6. Verfahren nach einem der Ansprüche 1 bis 5, wobei die Zeitdauer der Behandlung 180 bis 360 Minuten beträgt.

7. Verfahren nach einem der Ansprüche 1 bis 6, wobei der Sauerstoffgehalt der sauerstoffhaltigen oder sauerstoffbildenden Atmosphäre 15 bis 30 Gew.-% beträgt.

8. Verfahren nach Anspruch 7, wobei der Sauerstoffgehalt 20 bis 25 Gew.-% beträgt.

9. Verfahren nach Anspruch 1, wobei die Metallsalzlösung Nitrat-haltig ist.

10. Verfahren nach einem der Ansprüche 1 oder 9, wobei die Konzentration der Metallsalzlösung 5 bis 10 Gew.-% beträgt.

11. Destillationskolonne mit einer Packung, wie in einem der Ansprüche 1 bis 10 definiert.

## Claims

1. A process for the distillative separation of a mixture of substances using a packing formed from a packing material having a microscopic surface roughness having a center line average value Rₐ, according to DIN 4768/1, of from 0.01 to 10 µm, obtainable by
- treatment of a metal alloy at from 600 to 1200°C for from 30 to 600 minutes in an oxygen-containing or oxygen-forming atmosphere, or by
- impregnation of a stainless steel alloy with a metal salt solution having a concentration of from 1 to 20% by weight and treatment at from 200 to 700°C for from 5 to 60 minutes in air.

2. A process as claimed in claim 1, the center line average value Rₐ being from 0.05 to 1 µm.

3. A process as claimed in either of claims 1 and 2, the metal alloy being a stainless steel alloy.

4. A process as claimed in claim 3, the stainless steel alloy used being a chromium- or aluminum-containing stainless steel alloy.

5. A process as claimed in any of claims 1 to 4, the treatment temperature being from 750 to 1000°C.

6. A process as claimed in any of claims 1 to 5, the duration of the treatment being from 180 to 360 minutes.

7. A process as claimed in any of claims 1 to 6, the oxygen content of the oxygen-containing or oxygen-forming atmosphere being from 15 to 30% by weight.

8. A process as claimed in claim 7, the oxygen content being from 20 to 25% by weight.

9. A process as claimed in claim 1, the metal salt solution being nitrate-containing.

10. A process as claimed in any of claims 1 to 9, the concentration of the metal salt solution being from 5 to 10% by weight.

11. A distillation column comprising a packing, as defined in any of claims 1 to 10.

## Revendications

1. Procédé de séparation par distillation d'un mélange avec utilisation d'un garnissage, formé d'un matériel de garnissage présentant une rugosité de surface microscopique avec une valeur de rugosité moyenne Rₐ selon la norme DIN 4768/1 de l'ordre de 0,01 à 10 µm, que l'on peut obtenir
- par traitement d'un alliage métallique à des températures de 600 à 1200°C pendant une durée de 30 à 600 minutes dans une atmosphère contenant de l'oxygène ou génératrice d'oxygène, ou
- par imprégnation d'un alliage d'acier spécial par une solution de sel métallique à une concentration de 1 à 20% en poids et par traitement à des températures de 200 à 700°C pendant une durée de 5 à 60 minutes dans l'air.

2. Procédé suivant la revendication 1, dans lequel la valeur de rugosité moyenne Rₐ est de 0,05 à 1 µm.

3. Procédé suivant l'une des revendications 1 et 2, dans lequel l'alliage métallique est un alliage d'acier spécial.

4. Procédé suivant la revendication 3, dans lequel, comme alliage d'acier spécial, on utilise un alliage d'acier spécial contenant du chrome ou de l'aluminium.

5. Procédé suivant l'une des revendications 1 à 4, dans lequel la température de traitement est de 750 à 1000°C.

6. Procédé suivant l'une des revendications 1 à 5, dans lequel la durée du traitement est de 180 à 360 minutes.

7. Procédé suivant l'une des revendications 1 à 6, dans lequel la teneur en oxygène de l'atmosphère contenant de l'oxygène ou génératrice d'oxygène est de 15 à 30% en poids.

8. Procédé suivant la revendication 7, dans lequel la teneur en oxygène est de 20 à 25% en poids.

9. Procédé suivant la revendication 1, dans lequel la solution de sel métallique contient du nitrate.

10. Procédé suivant l'une des revendications 1 et 9, dans lequel la concentration de la solution de sel métallique est de 5 à 10% en poids.

11. Colonne de distillation comportant un garnissage tel que défini dans l'une des revendications 1 à 10.
